# EUROPEAN PATENT APPLICATION

(11) **EP 2 166 486 A2**
(43) Date of publication of application: **24.03.2010**
(21) Application number: 09008137.3
(22) Date of filing: 22.06.2009
(51) Int. Cl.: G06K 9/00, G07D 7/20

(54) **Portable image-extracting device for identifying tiny images and method of the same**

(30) Priority: 17.09.2008 TW 97135584
(71) Applicant: Lumos Technology Co., Ltd., Wenshan Taipei City 116 (TW)
(72) Inventor: Yang, Chih-Yi, Wenshan District Taipei City 116 (TW)
(74) Representative: TER MEER - STEINMEISTER & PARTNER GbR

(57) **Abstract**

A portable image-extracting device (70) for identifying tiny images (50) and a method of the same are used to magnify a tiny image and then identify the truth thereof. The device (70) includes a magnifying lens (10) for magnifying the tiny image (50) to a magnified image (12); an image-extracting element (20) for extracting the magnified image (12) and converting it into an image signal (22); an image-identifying element (30) for identifying the image signal (22) to determine the tiny image (50) is true or false; a displaying element (40) for displaying the determination of truth of the tiny image (50). The magnifying lens (10) is provided therein with more than one auxiliary light source. The auxiliary light source can be a visible light source, an invisible light source or a light source of a specific wavelength, thereby assisting in displaying the tiny image. The image-identifying element (30) determines whether the image is true or false via certified information stored in an internal memory (306) for identification or a remote server (60) connected to the image-identifying element (30) by cable or wirelessly.

## Description

### BACKGROUND OF THE INVENTION

### 1. Field of the Invention

The present invention relates to an identification device and a method of the same, and in particular to a portable image-extracting device for identifying tiny images and a method of the same.

### 2. Description of Prior Art

Thousands of counterfeits flood in the market all the time, such as foods, drugs, electronic products, documents or the like. As a result, those counterfeits seriously affect our livelihood, health, economy and safety. For example, since the ingredients and source of counterfeit drugs are similar to those of the real drugs, many people may confuse with these drugs and thus makes people in danger of counterfeit drugs. Therefore, the prevention of counterfeit drugs is an important issue with regard to public sanitary and health. On the other hand, counterfeit electronic products have defects in terms of usage and safety, the goodwill and profit of the owners of true brands will be impacted considerably. Furthermore, as for to the counterfeit documents, for example, it goes without saying that fake money affects national economy a lot. A counterfeit ticket, identification card or passport has a great influence on economy and safety in terms of personal and national aspects. Therefore, people pay more attention to the anti-counterfeiting technique. Among all kinds of anti-counterfeiting techniques, the most popular way is to attach an anti-fake label on a real product. In order to achieve the anti-counterfeiting effect, the anti-fake label is made too tiny to be identified by naked eyes. In addition, with the cooperation of an identification element, the anti-counterfeiting effect can be enhanced to a further extent.

### SUMMARY OF THE INVENTION

The present invention is to provide a portable image-extracting device for magnifying tiny images to identify whether it is true or false and a method of the same.

The present invention is to provide a portable image-extracting device for identifying tiny images, which includes a magnifying lens for magnifying a tiny image to a magnified image; an image-extracting element for extracting the magnified image and converting it into an image signal; an image-identifying element electrically connected to the image-extracting element for identifying the image signal so as to determine the tiny image is true or false; a displaying element electrically connected to the image-identifying element for displaying the determination of truth of the tiny image. The magnifying lens is provided therein with at least one auxiliary light source. The auxiliary light source can be a visible light source, invisible light source or a light source of a specific wavelength, thereby assisting in displaying the tiny image. Further, the image-identifying element comprises an optical character identification sub-unit for identifying the numerals or letters of the image signal. The image-identifying element determines whether the image is true or false via certified information stored in an internal memory for identification or a remote server connected to the image-identifying element by cable or wirelessly.

### BRIEF DESCRIPTION OF THE DRAWINGS

Fig. 1 is a schematic view showing the construction of the portable image-extracting device for identifying tiny images according to the present invention;
Fig. 2 is a schematic view showing the image-identifying element of the present invention; and
Fig. 3 is a flow chart showing the method for identifying tiny images performed by the portable image-extracting device according to the present invention.

### DETAILED DESCRIPTION OF THE INVENTION

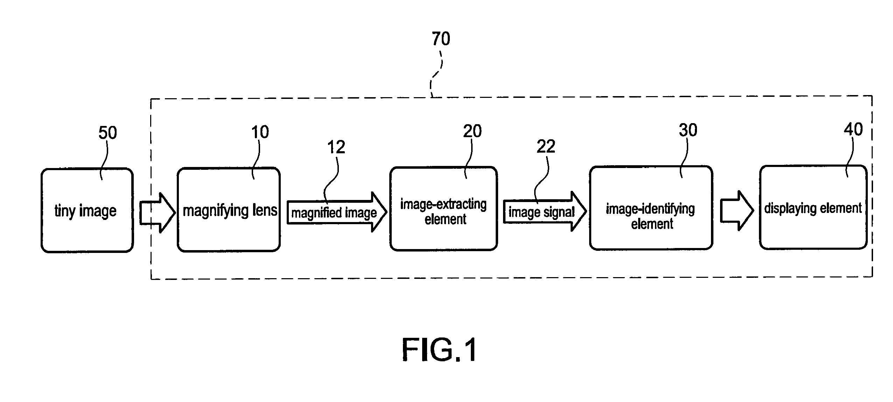

Please refer to Fig. 1, which is a schematic view showing the construction of the portable image-extracting device for identifying tiny images according to the present invention. The portable image-extracting device 70 for identifying tiny images according to the present invention includes a magnifying lens 10, an image-extracting element 20, an image-identifying element 30 and a displaying element 40. The image-identifying element 30 is electrically connected to the image-extracting element 20 and the displaying element 40. The magnifying lens 10 comprises a light-entering surface and a light-exiting surface. A tiny image 50 can be received by the light-entering surface and then magnified to a magnified image 12. Finally, the magnified image 12 is outputted via the light-exiting surface. The image-extracting element 20 is provided with respect to the light-exiting surface for extracting the magnified image 12 and converting it into an image signal 22. The image-identifying element 30 is used to identify the truth of the tiny image 50. Preferably, the tiny image 50 is an image that is visible to but unidentifiable by naked eyes, so that it is difficult to counterfeit the tiny image. Further, the magnifying lens 10 is provided therein with more than one auxiliary light source. The auxiliary light source is a visible light source, an invisible light source or a light source of a specific wavelength for assisting in displaying the tiny image. Further, the image signal 22 is one corresponding to numerals, letters or icons.

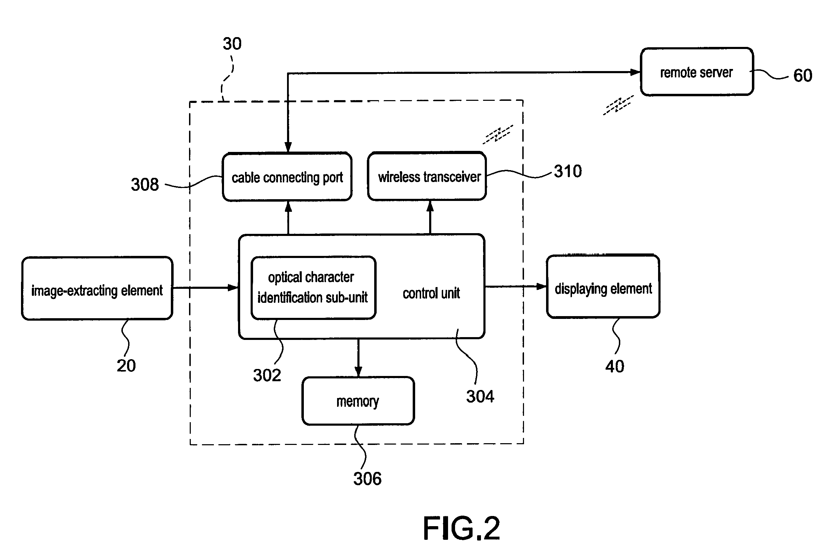

Please refer to Fig. 2, which is a schematic view showing the image-identifying element 30 of the present invention. The image-identifying element 30 comprises a memory 306, a control unit 304, a cable connecting port 308 and a wireless transceiver 310. The control unit 304 is electrically connected to the memory 306, the cable connecting port 308, the wireless transceiver 310, the image-extracting element 20 and the displaying element 40. The memory 306 is used to store certified information for identifying whether an image is true or false. After the control unit 30 receives the image signal 22 and compares with the certified information stored in the memory 306, the truth of the image signal 22 can be determined. Alternatively, a remote server 60 can be connected to the image-identifying element 30 by cable (via the cable connecting port 308) or wirelessly (via the wireless transceiver 310), whereby the truth of the image signal 22 can be determined. The control unit 304 further comprises an optical character identification sub-unit 302 for identifying the numerals or letters of the image signal 22.

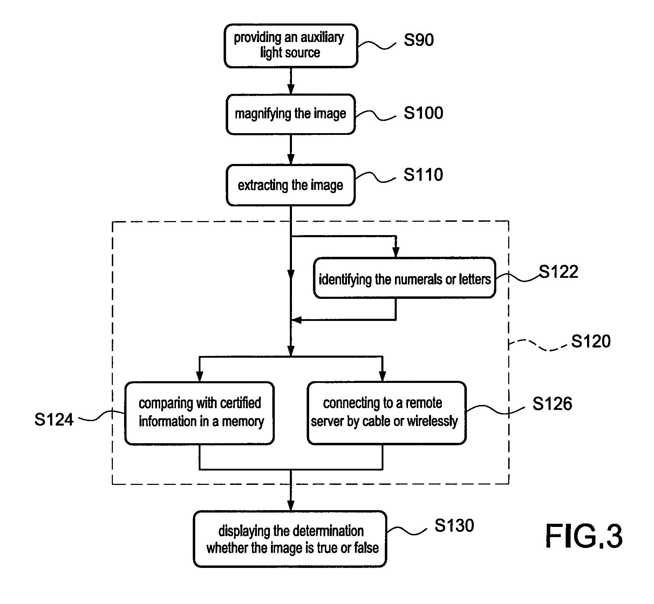

Please refer to Fig. 3, which is a flow chart showing the method for identifying tiny images performed by the portable image-extracting device according to the present invention. First, in the step S90, an auxiliary light source is provided (the auxiliary light source is a visible light source, an invisible light source or a light source of a specific wavelength) for assisting in displaying the tiny image. Then, in the step S100, the tiny image 50 is magnified to a magnified image 12. In the step S110, the magnified image 12 is extracted and then converted into an image signal 22. In the step S120, the truth of the image signal 22 is identified. The step S120 further comprises a step S122, whereby the numerals or letters of the image signal 22 are identified. In the step S124, the image signal 22 is compared with the certified information stored in the memory 306. In the step S126, a remote server 60 is connected by cable or wirelessly to determine whether the image signal 22 is true or false. Finally, in the step S130, the result of determining whether the tiny image 50 is true or false is displayed.

Therefore, according to the present invention, the portable image-extracting device for identifying tiny images and the method of the same can identify the images unidentifiable by the naked eyes, so that the anti-counterfeiting effect can be enhanced. Further, preferably, the remoter server 60 is a database (not shown).

## Claims

1. A portable image-extracting device (70) for identifying tiny images, which is used to magnify a tiny image (50) for identification and comprises:
a magnifying lens (10) for magnifying the tiny image (50) to a magnified image (12);
an image-extracting element (20) provided with respect to the magnifying lens (10) for extracting the magnified image (12) and converting the magnified image (12) into an image signal (22); and
an image-identifying element (30) electrically connected to the image-extracting element (20) for identifying the image signal (22) so as to determine whether the tiny image (50) is true or false.

2. The portable image-extracting device (70) for identifying tiny images according to claim 1, wherein the image-identifying element (30) further comprises:
a memory (306) for storing certified information for identification; and
a control unit (304) electrically connected to the memory (306), the control unit (304) comparing the image signal (22) with the certified information to determine whether the tiny image (50) is true or false.

3. The portable image-extracting device (70) for identifying tiny images according to claim 2, wherein the control unit (304) further comprises an optical character identification sub-unit (302) for identifying numerals or letters of the image signal.

4. The portable image-extracting device (70) for identifying tiny images according to claim 1, further comprising a displaying element (40) electrically connected to the image-identifying element (30) for displaying the determination of truth of the tiny image (50).

5. The portable image-extracting device (70) for identifying tiny images according to claim 2, wherein the image-identifying element (30) further comprises a cable connecting port (308) electrically connected to the control unit (304) for connecting to a remote server (60) by cable, thereby determining whether the tiny image (50) is true or false.

6. The portable image-extracting device (70) for identifying tiny images according to claim 2, wherein the image-identifying element (30) further comprises a wireless transceiver (310) electrically connected to the control unit (304) for connecting to a remote server (60) wirelessly, thereby determining whether the tiny image (50) is true or false.

7. The portable image-extracting device (70) for identifying tiny images according to claim 1, wherein the magnifying lens (10) is provided therein with more than one auxiliary light source.

8. The portable image-extracting device (70) for identifying tiny images according to claim 7, wherein the auxiliary light source is a visible light source, an invisible light source or a light source of a specific wavelength.

9. The portable image-extracting device (70) for identifying tiny images according to claim 1, wherein the image signal (22) is one corresponding to numerals, letters or icons.

10. A method for identifying tiny images, which is used to magnify a tiny image for identification and comprises the steps of:
a) magnifying the tiny image to a magnified image;
b) extracting the magnified image and converting the magnified image into an image signal; and
c) identifying the image signal so as to determine whether the tiny image is true or false.

11. The method according to claim 10, wherein the step c) involves comparing the image signal with certified information in a memory.

12. The method according to claim 10, wherein the step c) further comprising a step c1) of identifying numerals or letters of the image signal.

13. The method according to claim 10, further comprising a step d) of displaying the determination of truth of the tiny image.

14. The method according to claim 10, wherein an auxiliary light source is used before the step a) so as to assist in displaying the tiny image.

15. The method according to claim 14, wherein the auxiliary light source is a visible light source, an invisible light source or a light source of a specific wavelength.
